# EUROPEAN PATENT APPLICATION

(11) **EP 1 973 113 A1**
(43) Date of publication of application: **24.09.2008**
(21) Application number: 07706940.9
(22) Date of filing: 11.01.2007
(51) Int. Cl.: G11B 27/02

(54) **CONTENTS REPRODUCING DEVICE, CONTENTS REPRODUCING METHOD, AND PROGRAM**

(30) Priority: 13.01.2006 JP 2006006255
(71) Applicant: Sony Corporation, Minato-ku Tokyo (JP)
(72) Inventor: TAKATSUKA, Susumu, Tokyo 141-0001 (JP); SAKO, Yoichiro, Tokyo 141-0001 (JP); INOUE, Makoto, Tokyo 141-0001 (JP); TAKAI, Motoyuki, Tokyo 141-0001 (JP); TERAUCHI, Toshiro, Tokyo 141-0001 (JP); TAMORI, Hirofumi, Tokyo 141-0001 (JP); SHIRAI, Katsuya, Tokyo 141-0001 (JP); MAKINO, Kenichi, Tokyo 141-0001 (JP); NAKAMURA, Takatoshi, Tokyo 141-0001 (JP); KOMORI, Akihiro, Tokyo 141-0001 (JP); SANO, Akane, Tokyo 141-0001 (JP); SASAKI, Toru, Tokyo 141-0001 (JP); SAKAI, Yuichi, Tokyo 141-0001 (JP)
(74) Representative: Beder, Jens
(86) International application number: PCT/JP2007/050633
(87) International publication number: WO 2007/081048

(57) **Abstract**

Music content are reproduced in the order of the newest time information that has been registered. A music content database 7 has stored a plurality of music content. Each music content has been stored in the music content database 7 along with a time stamp that is time information that represents a time at which the music content was registered in the music content database 7. A CPU 3 creates play lists corresponding to, for example, tempos. The created play lists are stored in a play list database 8. The CPU 3 selects a play list corresponding to a moving tempo obtained from a tempo detection section 9 and selects music content in the order of the newest time information registered from the music content corresponding to the selected play list. The selected music content are supplied to a decoder and amplification section 12 and reproduced by a head phone 14.

## Description

### Technical Field

The present invention relates to a content reproducing apparatus, content reproducing method, and content reproducing program.

### Background Art

Some reproducing apparatus that reproduce music content have a function with which the user can freely designate the reproduction order of a plurality of music content. This function is called a play list. A play list can be freely edited and stored in a file. Thus the user can store his or her designated reproduction order of his or her favorite music content and listen to them in the stored reproduction order at any time.

Moreover, in recent years, a technique of categorizing music content based on their characteristics such as song name, artist name, genre, tempo, released year, number of reproduction times, and so forth and automatically creating a list of content including common characteristics has been proposed (refer to Japanese Patent Application Laid-Open (translation version of PCT international publication) No. 2005-526340T). This list that was created in such a manner is also referred to as a play list. As the storage (record) capacities of hard disks, optical discs, and semiconductor memories are increasing, it is becoming difficult for the user to know whole music content stored (recorded) thereon. In this situation, with a play list, the user can easily listen to his or her favorite music content.

If the user tries to listen to music content A that was released in 1998, it is rare that he or she exactly memorizes its released year. Even in this situation, if a play list such as "the last half of the 90s" has been created, when the user selects the play list and performs the reproduction process, he or she can listen to music content A.

Moreover, in recent years, a technique of changing reproduction modes of music content corresponding to the user's body motions has been proposed. Japanese Patent Application Laid-Open No. 2005-156641 describes a reproduction mode controlling apparatus that detects user's walking and running tempos and changes the reproduction speeds of music content corresponding to the detected tempos.

As the storage capacity of record mediums increases, the number of music content stored thereon increases. Thus the number of music content assigned to one play list increases. For example, to allow a play list to deal with human's ambiguous memory, for example, the foregoing released year, the play list has to have a margin of common characteristics of music content such as "the last half of the 90s" instead of strictly "1998". Thus the number of music content corresponding to one play list becomes large. When there are a plurality of music content assigned to one play list, the reproducing apparatus side properly shuffles the music content and reproduces them at random.

Among a plurality of music content assigned to the same play list, there are those to which the user wants to preferentially listen and those to which he or she does not. However, since the reproduction order becomes at random, music content to which he or she wants to preferentially listen may be at a rear portion of the reproduction order. Thus there is a risk of which they are not reproduced soon. Although the user may skip music content to which he or she does not want to listen so as to change music content, it is difficult for him or her to do that while he or she is walking or running.

### Disclosure of the Invention

Therefore, an object of the present invention is to provide a content reproducing apparatus, a content reproducing method, and a content reproducing program that determine music content to which the user likely wants to listen from those assigned to a play list and preferentially reproduce the determined music content.

To solve the foregoing problem, the present invention is a content reproducing apparatus, comprising:
a content storage section which stores a plurality of content along with time stamps associated therewith;
a play list creation section which creates a play list to assign the plurality of content; and
a control section which reproduces the content assigned to the play list in an order based on the time stamps.

In addition, the present invention is a content reproducing method, comprising:
a content storage step of storing a plurality of content along with time stamps associated therewith;
a play list creation step of creating a play list to assign the plurality of content; and
a control step of reproducing the content assigned to the play list in an order based on the time stamps.

In addition, the present invention is a program which causes a computer to execute:
a content storage step of storing a plurality of content along with time stamps associated therewith;
a play list creation step of creating a play list to assign the plurality of content; and
a control step of reproducing the content assigned to the play list in an order based on the time stamps.

According to the present invention, music content to which the user likely wants to listen can be selected from those assigned to a play list. The selected music content can be preferentially reproduced. Brief Description of Drawings

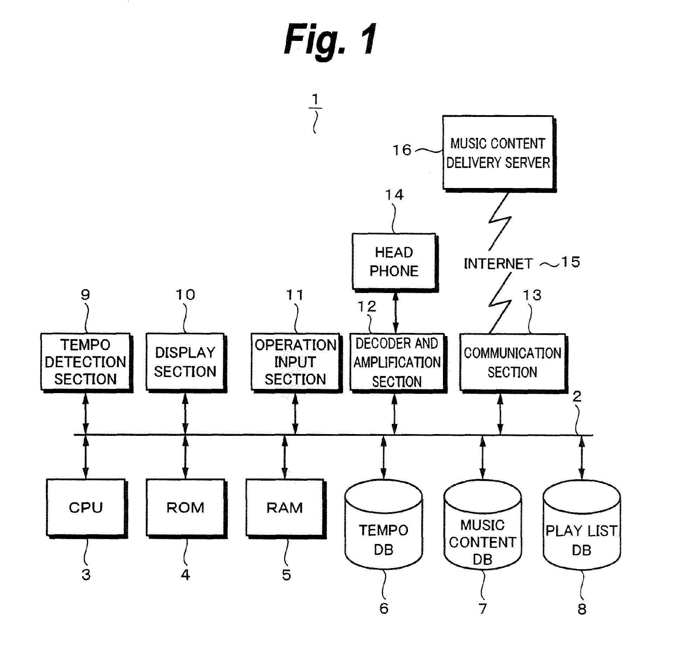

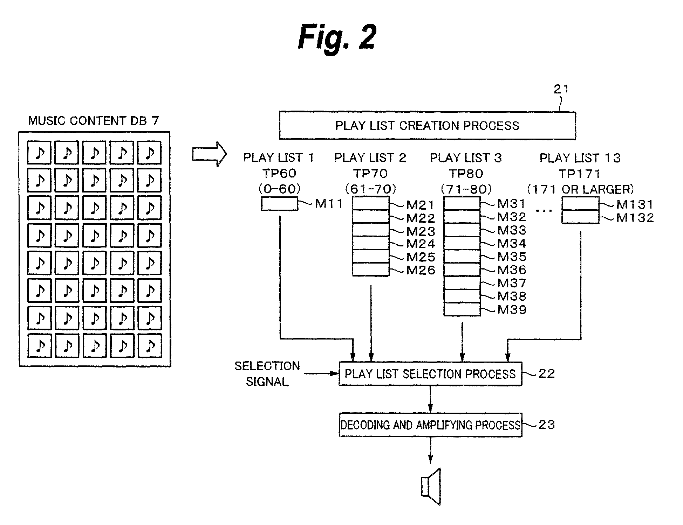

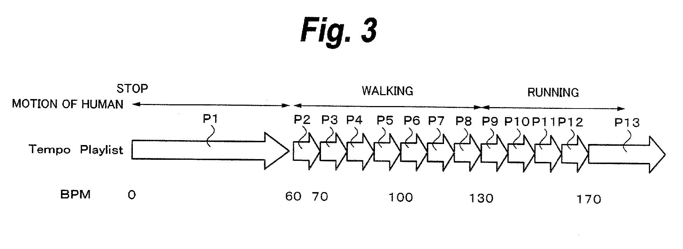

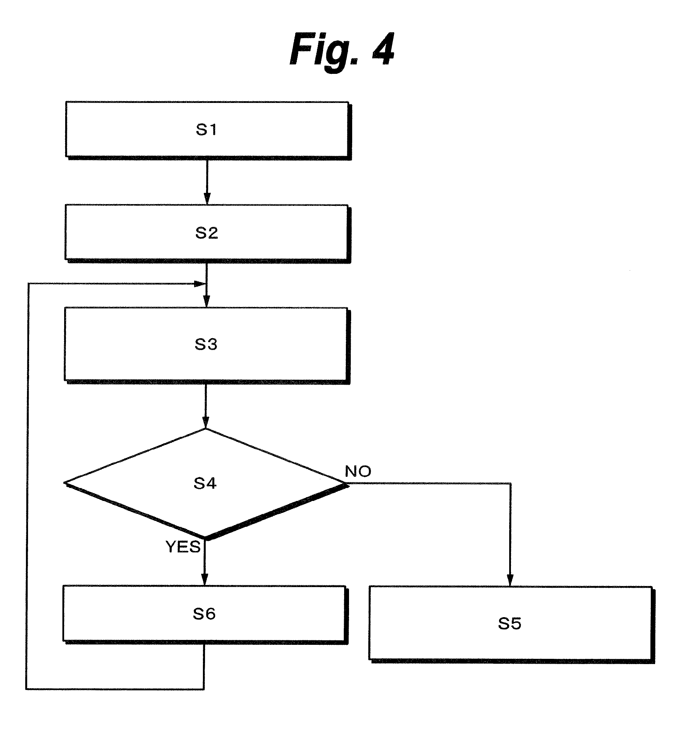

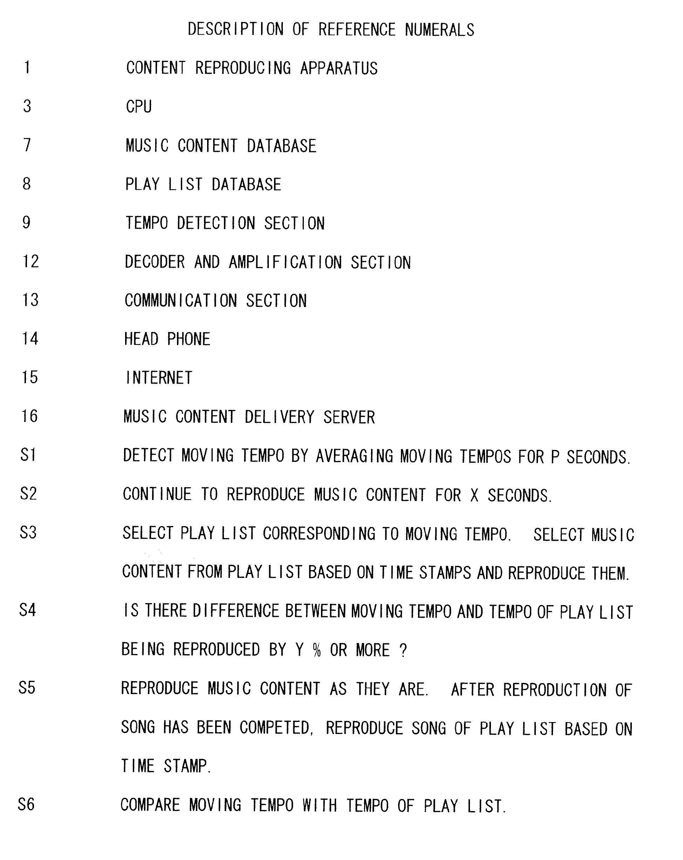

Fig. 1 is a block diagram showing a structure of a content reproducing apparatus according to an embodiment of the present invention; Fig. 2 is a schematic diagram showing an example of processes of the content reproducing apparatus according to the embodiment of the present invention; Fig. 3 is a schematic diagram for describing an example of a play list corresponding to a user's moving tempo; and Fig. 4 is a flow chart showing a flow of processes under the control of a CPU of the content reproducing apparatus according to the embodiment of the present invention. Best Modes for Carrying out the Invention

Next, with reference to the accompanying drawings, an embodiment of the present invention will be described. Fig. 1 shows a structure of a content reproducing apparatus 1 according to the embodiment of the present invention. Connected to a bus 2 of the content reproducing apparatus 1 are a CPU (Central Processing Unit) 3, a ROM (Read Only Memory) 4, a RAM (Random Access Memory) 5, a tempo database (database is abbreviate as DB in the drawing) 6, a music content database 7, a play list database 8, a tempo detection section 9, a display section 10, an operation input section 11, a decoder and amplification section 12, and a communication section 13. The decoder and amplification section 12 is also connected to a head phone 14. In this embodiment, the content reproducing apparatus 1 is of a portable type. With the content reproducing apparatus 1, the user can listen to music content while he or she is moving such as walking, running, or exercising.

Next, the structure of the content reproducing apparatus 1 will be described in detail. The CPU 3 that is an example of the control section controls each section of the content reproducing apparatus 1 by executing a program stored in the ROM 4. As will be described later, the CPU 3 changes the reproduction order of music content assigned to a play list and reproduces them in the changed order. The RAM 5 is used as a work area with which the CPU 3 executes the program. In addition, the RAM 5 is used as means for temporarily storing data generated in each process.

The tempo database 6 has stored moving tempos such as user's walking tempo and running tempo (hereinafter referred to as moving tempos) detected by the tempo detection section 9. When a moving tempo detected by the tempo detection section 9 varies for a predetermined amount or more, a moving tempo stored in the tempo database 6 is changed.

The music content database 7 as an example of a content storage section associatively stores a plurality of music content and their meta information. Meta information is data that describe an attribute of each of music content. Meta information is, for example, song name, tempo, number of times of reproduction, genre, performing duration, performer(s), and so forth of each of music content. Each of music content is stored in the music content database 7 along with a time stamp associated therewith. In this embodiment, a time stamp is data that represent time information (year, month, day, hour, minute, and so forth) corresponding to a time at which the music content was registered to the music content database 7. A time stamp is treated as one record of the foregoing meta information.

A plurality of play lists created under the control of the CPU 3 have been stored in the play list database 8. The tempo database 6, the music content database 7, and the play list database 8 are composed, for example, of respective hard disks. Of course, the storage area of one hard disk may be divided into areas for tempos, music content, and play lists. The music content database 7 may be composed, for example, of a semiconductor memory or an optical disc that is attached to and detached from the content reproducing apparatus 1 instead of the hard disks that are built in the content reproducing apparatus 1.

The tempo detection section 9 is composed of an acceleration sensor mounted, for example, on the main body of the content reproducing apparatus 1 or the head phone 14. The tempo detection section 9 detects the user's moving tempo. The moving tempo is defined as the mean number of time intervals T after one foot touches the ground until the other foot touches it for a predetermined time period, for example, one minute, in other words, the number of foot steps per minute. Thus, when the user is moving, for example, walking or running at fast speed, the number of foot steps per minute is large.

When a male adult walks at a slow pace, the moving tempo is around in the range from 105 foot steps/minute to 110 foot steps/minute. When he walks at a fast pace, the moving tempo is around in the range from 120 foot steps/minute to 125 foot steps/minute. Experimental results show that the moving tempo of humans is around in the range from 60 to 250 (foot steps/minute) and that the tempo in their unintentional walking state deviates only by around several %. In addition, it is known that there is a difference of around 70 foot steps/minute in the moving tempo between normal walking and full speed running although it depends on person by person.

In a song of music content, a tempo is the length of a beat, that is, the speed of a tune. A tune is a basic rhythm at each equal interval of music content. A beat is one time unit. The length of a tune depends on music content, but may change in the same music content. In this specification, as the unit of a tempo, unit BPM (Beat per Minute) that represents the mean number of quarter notes per minute is used.

The tempo detection section 9 performs a process of correlating the tempo of the song in the unit of BPM with the detected moving tempo. In this case, the moving tempo may not be correlated with the tempo of the song in the ratio of 1 to 1. Instead, the moving tempo may be multiplied by a proper correction coefficient and then compared with the tempo of the song. The process of correlating the moving tempo with the tempo of the song may be executed by the CPU 3.

The tempo detection section 9 is not limited to an acceleration sensor, but may be a speed sensor, a pressure sensor, a body motion acceleration sensor, a position sensor, or the like. Instead, the tempo detection section 9 may detect biological information of, for example, heart rate, skin perspiration, skin resistance, muscle potential, or body surface temperature of the user to detect the moving tempo of the user on the basis of the biological information. The tempo detection section 9 may be separated from the content reproducing apparatus 1. In this case, the tempo detection section 9 may wirelessly communicate with the content reproducing apparatus 1 to supply the walking tempo to the content reproducing apparatus 1.

The display section 10 is composed, for example, of an LCD (Liquid Crystal Display). The display section 10 displays various types of information based on the operations of the content reproducing apparatus 1. The display section 10 displays, for example, reproduction position information, song name, and so forth of music content.

The operation input section 11 is composed of buttons and so forth disposed on the housing of the content reproducing apparatus 1 and a remote control device connected wirelessly or with a cable to the content reproducing apparatus 1. By operating the operation input section 11, music content can be, for example, reproduced, fast-forwarded, and rewound. In addition, with the operation input section 11, the user can freely create a play list. Instead, the forgoing display section 10 may be composed of a touch panel that functions as the operation input section.

The decoder and amplification section 12 decodes data of music content supplied from the music content database 7 and performs a D/A (Digital to Analog) conversion for the decoded data of music content. Data of music content that have been converted into an analog signal are amplified and supplied to the head phone 14. The head phone 14 reproduces music content.

The communication section 13 has functions of both an interface for connecting the content reproducing apparatus 1 to a music content server 16 and an interface for connecting the content reproducing apparatus 1 with an external device such as a personal computer. The communication section 13 can be connected, for example, to the music content delivery server 16 through the Internet 15, caused to communicate with the music content delivery server 16, and caused to download music content from the music content delivery server 16. When necessary, a file conversion process and an encoding process are performed for the downloaded music content. The processed music content is stored in the music content database 7 and registered. The content reproducing apparatus 1 can be connected to a personal computer, for example, through a USB (Universal Serial Bus) of the communication section 13. Music content ripped from a record medium such as an optical disc can be transferred from the personal computer to the content reproducing apparatus 1.

Next, with reference to Fig. 2 and Fig. 3, an example of the operation of the content reproducing apparatus 1 will be described. First, a play list selection process 21 is performed. As shown in Fig. 2, the music content database 7 has stored a plurality of music content (represented schematically by musical notes in Fig. 2). In the play list selection process 21, a play list is created in such a manner that music content are assigned on the basis of tempo information of meta information stored in association with the music content.

Play list 1 is created by music content having tempos in the range, for example, from 0 to 60 BPM. In addition, play list 2 is created by music content having tempos in the range, for example, from 61 to 70 BPM. In addition, play list 3 is created by music content having tempos in the range, for example, from 71 to 80 BPM. Likewise, play lists are created by music content having tempos that increment by 10 BPM. Play list 13 is created by music content having tempos equal to or larger than 171 BPM. In Fig. 2, for simplicity, play lists 4 to 12 are omitted.

For example, music content M11 having a tempo of 55 BPM as meta information is assigned to play list 1. Music content M21 having a tempo of 67 BPM is assigned to play list 2. Music content M31 having a tempo of 74 BPM is assigned to play list 3. Music content M131 having a tempo of 175 BPM is assigned to play list 13. As shown in Fig. 2, in this embodiment, it is assumed that music content M11 is assigned to play list 1, music content M21 to M26 are assigned to play list 2, music content M31 to M39 are assigned to play list 3, and music content M131 to M132 are assigned to play list 13.

Meta information is added to each play list. Meta information represents a characteristic of each play list. For example, meta information TP60 is added to play list 1. Meta information TP60 denotes that the play list corresponds to music content having tempos in the range from 0 to 60 BPM included in meta information. Meta information TP70 is added to play list 2. Meta information TP70 denotes that the play list corresponds to music content having tempos in the range from 61 to 70 BPM included in meta information. Meta information TP80 is added to play list 3. Meta information TP80 denotes that the play list corresponds to music content having tempos in the range from 71 to 80 BPM included in meta information. Meta information TP171 is added to play list 13. Meta information TP171 denotes that the play list corresponds to music content having tempos equal to or larger than 171 BPM included in meta information.

A play list created in the play list creation process 21 is stored in the play list database 8 along with meta information added to each play list.

Thereafter, a play list selection process 22 is performed. The play list selection process 22 is controlled with a selection signal generated by the CPU 3 corresponding to information supplied from the tempo detection section 9.

Fig. 3 shows an example of changes of moving states of a human from a stop state, to a walking state in which he or she gradually increases the walking speed, to a running state. When the human is slowly walking, the tempo detection section 9 obtains tempos in the range from around 0 to 60 BPM. When the human is regularly walking, the tempo detection section 9 obtains tempos in the range from around 61 BPM to 130 BPM. When the human is running, the tempo detection section 9 obtains tempos equal to or larger than 131 BPM.

As shown in Fig. 3, when the tempo detection section 9 obtains tempos as user's moving tempos, in the range from 0 to 60 BPM, play list 1 (abbreviated as P1 in Fig. 3) is selected and music content corresponding to play list 1 are reproduced. When the tempo detection section 9 obtains tempos as user's moving tempos in the range from 61 to 70 BPM, play list 2 (abbreviated as P2 in Fig. 3) is selected and music content corresponding to play list 2 are reproduced. When the tempo detection section 9 obtains tempos as user's moving tempos in the range from 71 to 80 BPM, play list 3 (abbreviated as P3 in Fig. 3) is selected and music content corresponding to play list 3 are reproduced. Likewise, when the tempo detection section 9 obtains another moving tempo, a play list corresponding to the obtained user's moving tempo is selected and music content corresponding to the selected play list are reproduced.

Now, it is assumed that the tempo detection section 9 obtains 78 BPM as a user's moving tempo. The detected moving tempo (78 BPM) is supplied to the CPU 3. Since the moving tempo supplied from the tempo detection section 9 is 78 BPM, the CPU 3 generates a selection signal that causes a play list corresponding to meta information TP8 to be selected from play lists corresponding to tempos stored in the play list database 8. The generated selection signal causes play list 3 corresponding to meta information TP80 to be selected.

Moreover, in the play list selection process 22, a process of controlling the reproduction order of music content assigned to the selected play list is performed. In the past, the reproduction order of music content M31 to M39 assigned to play list 3 was randomly changed and they were reproduced in the changed reproduction order. Thus there was a risk of which music content to which the user wants to listen cannot be reproduced soon. There is a tendency that the user preferentially listens to music content that he or she has just obtained. Thus, according to the present invention, since a time stamp represents time information about music content that was obtained and registered to the music content database 7, music content assigned to a play list can be selected and reproduced on the basis of time stamps.

In other words, when play list 3 has been selected, the CPU 3 selects music content that has the newest time information registered based on a time stamp from music content M31 to M39 assigned to play list 3 based on time stamps. The CPU 3 supplies the selected music content to the decoder and amplification section 12. The decoder and amplification section 12 performs a decoding and amplifying process 23 for the supplied music content and supplies the music content that have been processed in the decoding and amplifying process 23 to the head phone 14. The head phone 14 reproduces the music content. After the reproduction of the music content has been completed, the CPU 3 selects music content that has the next newest time information registered immediately after the music content that has been reproduced from music content of play list 3 and supplies the selected music content to the decoder and amplification section 12. The decoder and amplification section 12 performs the decoding and amplifying process 23 for the music content and reproduces the music content.

In such a manner, the user can reproduce music content having nearly the same tempo as his or her moving tempo in the order of the newest time information that has been registered.

Fig. 4 is a flow chart showing a flow of content reproduction processes controlled by the CPU 3 according to the embodiment of the present invention. At step S1, the tempo detection section 9 detects a moving tempo. Since the user's moving tempo varies time by time, the tempo detection section 9 detects the moving tempos, for example, for p seconds and treats their mean value as the user's moving tempo. When the moving tempo has been detected, the flow of the processes advances to step S2.

At step S2, music content that is being reproduced is reproduced for X seconds. The X seconds are, for example, five seconds to 10 seconds. When the music content is not being reproduced, the process at step S2 is not performed. Thereafter, the flow of the processes advances to step S3.

At step S3, the play list selection process is performed. In the play list selection process, a play list corresponding to the detected moving tempo is selected from a plurality of play lists corresponding to tempos. Music content is selected from music content corresponding to the selected play list and reproduced in the order of the newest time information registered based on time stamps. Thereafter, the flow of the processes advances to step S4.

At step S4, it is determined whether or not the difference between the moving tempo detected by the tempo detection section 9 and the tempo of the play list corresponding to the music content that is being reproduced is Y % or more. For example, it is determined whether or not the difference between the maximum value or the minimum value of the tempos of the play list selected at step S3 and the moving tempo is Y %. The value Y is set in a range where the moving tempo and the tempo of the music content are acoustically recognized as the nearly same tempo. At step S4, it may be determined whether or not the difference between the maximum value or the minimum value of the tempos of the play list selected at step S3 and the moving tempo exceeds a predetermined threshold value, for example, 5 BPM, rather than the comparison with relative values. When the difference does not exceed Y %, the flow of the processes advances to step S5.

At step S5, since the difference between the moving tempo and the tempo of the play list corresponding to the music content that is being reproduced does not exceed a predetermined value, the reproduction of the music content is continued in the same manner. After the reproduction of the music content has been completed, music content that has the next newest time information is selected from the play list selected at step S3 and reproduced.

When the difference is Y % or more at step S4, the flow of the processes advances to step S6 where a new play list is selected. At step S6, the tempo detected by the tempo detection section 9 and tempos of meta information added to play lists stored in the play list database 8 are compared. Thereafter, the flow of the processes advances to step S3 where a play list corresponding to the newly detected moving tempo is selected.

An embodiment of the present invention has been specifically described. However, the present invention is not limited to the foregoing embodiment. Instead, various modifications may be made based on the technical idea of the present invention.

For example, music content may be grouped on the basis of time stamps and those that belong to a selected group may be randomly reproduced. Specifically, music content corresponding to a selected play list is grouped as those registered to the music content database 7 within three days based on the current date and time, those registered within four to seven days, those registered within eight to 14 days, and those registered before 15 days. Music content that belongs to a group registered within three days may be reproduced at random more preferentially than others.

In addition, the content reproducing apparatus 1 may be of not only a portable type, but a console type. In addition, the present invention can be applied to a personal computer having a music content reproduction function. In addition, the present invention can be applied not only to an audio type reproducing apparatus, but to portable reproducing apparatus having other functions such as a mobile phone, a PDA (Personal Digital Assistants), an audio recording device, a digital camera, and so forth.

A time stamp may be not only time information that represents a time at which music content was registered to the music content database 7, but time information that represents a time at which music content was downloaded, time information that represents a time at which music content was ripped from a record medium such as an optical disc, and time information that represents a time at which music content was re-encoded.

In the foregoing embodiment, it was described that play lists corresponding to tempos were created in advance. Instead, a play list may be adaptively created corresponding to a detected moving tempo. For example, the CPU 3 may select music content having tempos that are different from the detected tempo by ± 5 BPM from the music content database 7 and create a play list corresponding to the selected music content. The CPU 3 may reproduce music content from the created play list in the order of the newest time information registered to the music content database 7.

In the foregoing embodiment, it was described that content was music content. Instead, the present invention can be applied to other content such as pictures, games, electronic books, still images, and so forth. For example, games and electronic books may be displayed in the order of the newest time information that represents times at which they were downloaded. In the foregoing embodiment, it was described that play lists were created corresponding to tempos. Instead, the present invention can be applied to the case that play lists are created corresponding to genres, artists, years, and so forth.

In addition, each means that composes the reproducing apparatus of the present invention may be accomplished by dedicated hardware, a method, or a programmed computer. In addition, a program that describes contents of processes may be recorded to a computer readable record medium such as a magnetic recording device, an optical disc, a magneto-optical disc, or a semiconductor memory.

## Claims

1. A content reproducing apparatus, comprising:
a content storage section which stores a plurality of content along with time stamps associated therewith;
a play list creation section which creates a play list to assign the plurality of content; and
a control section which reproduces the content assigned to the play list in an order based on the time stamps.

2. The content reproducing apparatus as set forth in claim 1,
wherein the play list creation section creates play lists categorized corresponding to a characteristic of one of tempo, genre, artist, and year.

3. The content reproducing apparatus as set forth in claim 2, further comprising:
a tempo detection section which detects a user's moving tempo,
wherein the control section selects a play list corresponding to the moving tempo from those categorized corresponding to the moving tempo and reproduces the content assigned to the selected play list.

4. The content reproducing apparatus as set forth in claim 1,
wherein the time stamps are time information which represents times at which the content recorded in a record medium were ripped to the content storage section.

5. The content reproducing apparatus as set forth in claim 1,
wherein the time stamps are time information that represents times at which the content were downloaded through a network.

6. The content reproducing apparatus as set forth in claim 1,
wherein the time stamps are time information which represents times at which the content stored in the content storage section were encoded.

7. The content reproducing apparatus as set forth in claim 1,
wherein the content assigned to the play list are categorized as a plurality of groups corresponding to the time stamps.

8. The content reproducing apparatus as set forth in claim 7,
wherein the control section reproduces content that belong to the group at random.

9. The content reproducing apparatus as set forth in claim 1,
wherein the content are those of music, sound, images, games, electronic books, and pictures.

10. A content reproducing method, comprising:
a content storage step of storing a plurality of content along with time stamps associated therewith;
a play list creation step of creating a play list to assign the plurality of content; and
a control step of reproducing the content assigned to the play list in an order based on the time stamps.

11. The content reproducing method as set forth in claim 10,
wherein the play list creation step is performed by creating play lists categorized corresponding to a characteristic of one of tempo, genre, artist, and year.

12. The content reproducing method as set forth in claim 11, further comprising:
a tempo detection step of detecting a user's moving tempo,
wherein the control step is performed by selecting a play list corresponding to the moving tempo from those categorized corresponding to the moving tempo and reproducing the content assigned to the selected play list.

13. The content reproducing method as set forth in claim 10,
wherein the content assigned to the play list are categorized as a plurality of groups corresponding to the time stamps.

14. The content reproducing method as set forth in claim 13,
wherein the control step is performed by reproducing content that belong to the group at random.

15. A program which causes a computer to execute:
a content storage step of storing a plurality of content along with time stamps associated therewith;
a play list creation step of creating a play list to assign the plurality of content; and
a control step of reproducing the content assigned to the play list in an order based on the time stamps.
